Europäisches Patentamt

European Patent Office

Office européen des brevets

(19)

(11) Numéro de publication: **0 202 712**
**B1**

(12) # FASCICULE DE BREVET EUROPEEN

(45) Date de publication du fascicule du brevet:
27.09.89

(51) Int. Cl.⁴: **C09K 5/06**

(21) Numéro de dépôt: 86200828.1

(22) Date de dépôt: 14.05.86

(54) Matériaux à base de chlorure de calcium hydraté accumulant de la chaleur par changement de phase à une température voisine de 24,5 degrés C.

(30) Priorité: 17.05.85 BE 1011263

(43) Date de publication de la demande:
26.11.86 Bulletin 86/48

(45) Mention de la délivrance du brevet:
27.09.89 Bulletin 89/39

(84) Etats contractants désignés:
AT BE CH DE FR GB IT LI NL SE

(56) Documents cités:
EP-A- 0 063 348
EP-A- 0 091 701
EP-A- 0 139 829

PATENTS ABSTRACTS OF JAPAN, vol. 7, no. 34 (C-150)
[1179], 10 février 1983, page 4 C 150; & JP - A
- 57 185 377 (MITSUBISHI DENKI K.K.) 15-11-1982

(73) Titulaire: CENTRE NATIONAL DE LA RECHERCHE
SCIENTIFIQUE (CNRS), 15, Quai Anatole France,
F-75700 Paris Cedex 07(FR)

(72) Inventeur: Jaffrin, André, Avenue Edith Cavell, 3,
F-06 Nice(FR)
Inventeur: Laugt, Marguerite, Villa Marie Chemin
Saint-Martin Tourettes-sur-Loup, F-06140 Vence(FR)
Inventeur: Gulon, Jacky, Chemin Départemental 15 La
Fardière, F-06390 Coaraze(FR)
Inventeur: Pelous, Edmonde, Batterie 121 Garbejaire,
F-06560 Valbonne(FR)

(74) Mandataire: Bouchoms, Maurice et al, Solvay & Cie
Département de la propriété industrielle 310, rue de
Ransbeek, B-1120 Bruxelles(BE)

## Description

La présente invention a pour objet des matériaux à base de chlorure de calcium hydraté qui accumulent de la chaleur latente par changement de phase à une température voisine de 24,5°C.

Le secteur technique de l'invention est celui du stockage de calories.

La récupération et le stockage de chaleur naturelle, par exemple de chaleur solaire, ou de chaleur artificielle au voisinage des températures d'ambience usuelles (20° à 25°C) implique de disposer de matériaux ayant une forte capacité thermique sous un faible écart de température.

Les sels hydratés, qui présentent un changement de phase solide-liquide, satisfont à cette exigence, grâce à une forte enthalpie de fusion. Parmi ces sels hydratés, les matériaux à base d'hexahydrate de chlorure de calcium sont particulièrement avantageux car il s'agit d'un produit peu onéreux ayant une enthalpie élevée, de l'ordre de 190 kJ/kg.

Toutefois, l'hexahydrate de chlorure de calcium fond au voisinage de 29°C, qui est une température trop élevée pour de nombreuses applications dans le domaine du chauffage ou de la climatisation de bâtiments dans lesquels on doit maintenir une température comprise entre 15°C et 20°C, par exemple pour le chauffage de serres, de locaux industriels, de bâtiments d'élevage ou la climatisation des locaux habités pendant l'été.

Les hydrates de chlorure de calcium présentent également des phénomènes de surfusion qui déplacement la température de fusion. On sait remédier à la surfusion en ajoutant au chlorure de calcium une petite quantité d'un agent nucléant, par exemple d'un sel isomorphe de l'hexahydrate de chlorure de calcium tel que l'hexahydrate de chlorure de strontium.

La publication de brevet européen 0.013.569 (demande EP No. 80.100089.4) DOW CHEMICAL Company, décrit des matériaux accumulateurs de chaleur à base de chlorure de calcium et d'un additif pris dans le groupe constitué par l'iodure, le sulfate ou l'oxyde de baryum. Ces matériaux fondent à des températures de l'ordre de 27°C à 28°C.

Un autre inconvénient des hydrates de chlorure de calcium résultent du fait que la fusion n'est pas congruente par suite de la formation de tétrahydrate entre 29°C et 32°C.

L'incongruence entraîne des décantations d'hydrates différents et il faut y remédier pour que l'utilisation d'un matériau pendant de très nombreux cycles thermiques successifs soit possible.

Le brevet suédois 41.0004 (CARLSON et Al) enseigne que la présence dans le chlorure de calcium industriel d'impuretés telles que $SrCl_2, 6H_2O$, NaCl et KCl augmente la solubilité du tétrahydrate de chlorure de calcium et évite la formation de celui-ci.

La publication de demande de brevet européen No. 0 063 348 (Demande EP No. 82.103104.4) DOW CHEMICAL Company décrit des matériaux congruents à base d'hexahydrate de chlorure de calcium contenant, en outre, du chlorure de potassium dans une proportion en poids comprise entre 0,5 et 8% et, de préférence, entre 4 et 4,7%.

Ces matériaux peuvent contenir, en outre, du chlorure de sodium, de l'hexahydrate de chlorure de strontium et un ou plusieurs agents nucléants. Les températures de fusion des matériaux décrits sont supérieures à 27°C.

Afin d'éviter des décantations dues à l'absence de congruence, il est connu de mélanger au matériau accumulateur de chaleur un épaississant encore appelé poudre stabilisante.

Le brevet européen 0 019 573 (A.N.V.A.R.) décrit par exemple des matériaux accumulateurs de chaleur comportant une poudre stabilisante qui est un mélange de diatomites ayant des formes aciculaires.

Un objectif de la présente invention est de procurer un nouveau matériau à base de chlorure de calcium hydraté pour accumuler de la chaleur par changement de phase qui présente une température de fusion au voisinage de 24,5°C et une enthalpie de fusion élevée dans une plage de température étroite comprise entre 23°C et 26°C, ce qui permet d'utiliser un tel matériau pour échanger des calories avec des locaux dans lesquels on désire maintenir une température comprise entre 15°C et 20°C.

Pour atteindre cet objectif, les inventeurs ont étudié systématiquement de nombreux matériaux à base d'hydrates de chlorure de calcium en faisant varier la proportion d'eau autour de la proportion qui correspond à l'hexahydrate et en ajoutant au chlorure de calcium des chlorures de potassium, d'ammonium et de sodium. Les mesures de température et d'enthalpie ont été effectuées dans des micro-calorimètres différentiels.

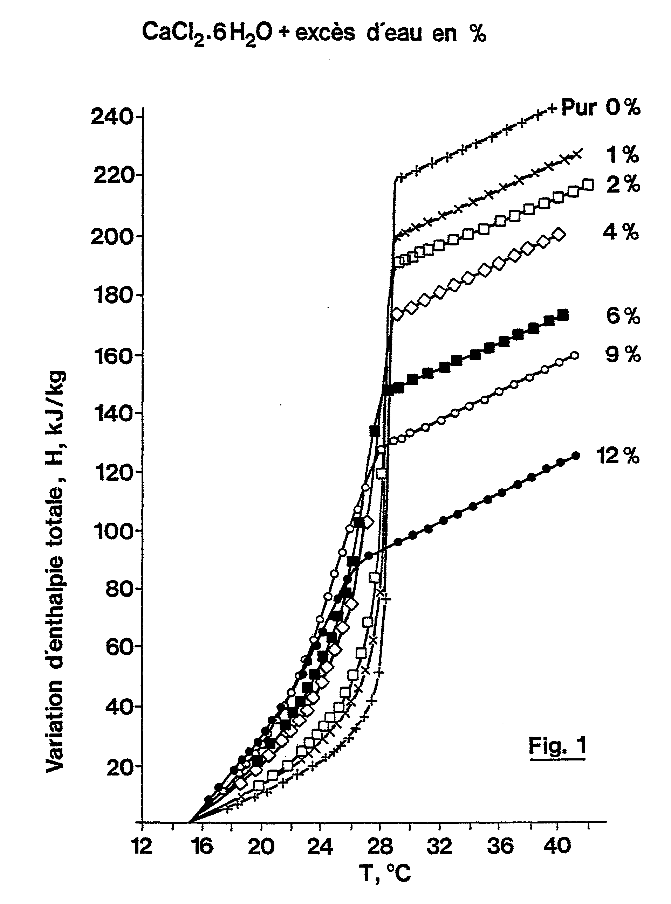

La figure 1 représente en abscisses la température entre 12°C et 40°C et en ordonnées la variation d'enthalpie totale en kJ/kg.

Les diverses courbes représentent des mesures effectuées sur des mélanges de chlorure de calcium et d'eau en partant d'un mélange correspondant à l'hexahydrate de chlorure de calcium (excés d'eau 0%) et en ajoutant des quantités d'eau excédentaires exprimées en pourcentage du poids total.

On voit qu la variation d'enthalpie totale qui correspond à la chaleur récupérable décroît rapidement lorsqu'il y a de l'eau en excès.

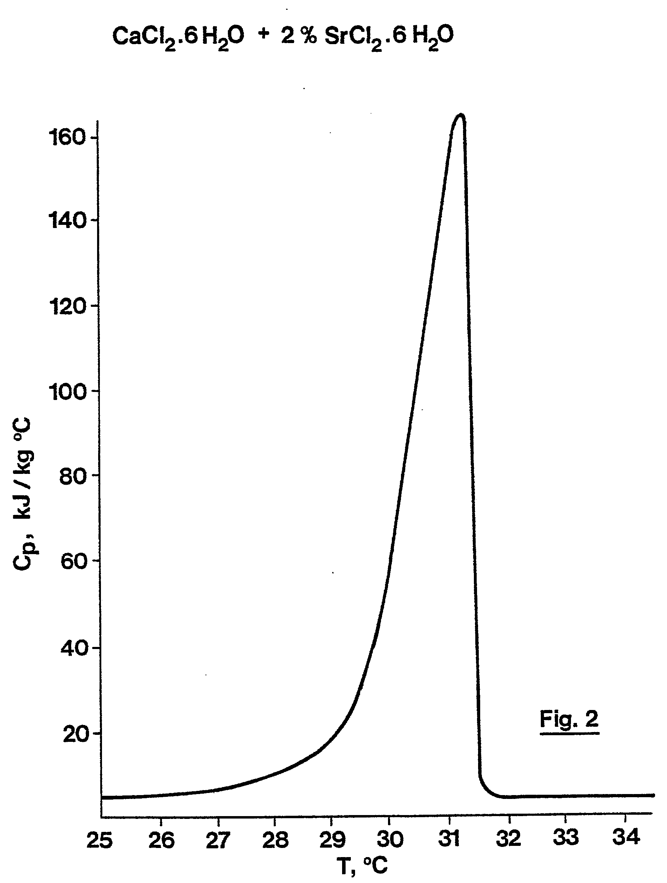

La figure 2 représente en ordonnées la chaleur spécifique Cp en kJ/kg/0°C d'un matériau composé de $CaCl_2, 6H_2O$ et de 2% en poids de $SrCl_2, 6H_2O$, c'est-à-dire un matériau tel que celui qui est décrit dans le brevet suédois 41 0004 (CARLSON et Al.). Cette courbe montre que la chaleur spécifique présente un pic très aigu pour une température de l'ordre de 31°C qui correspond à la température de fusion.

L'addition de $SrCl_2, 6H_2O$ qui améliore la congruence élève donc de deux degrés la température de fusion du matériau

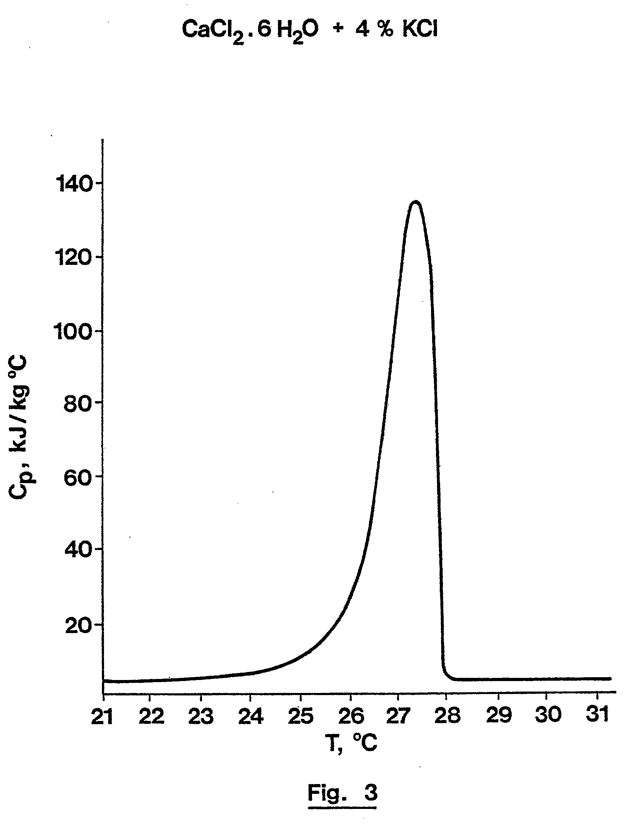

La figure 3 représente, avec les mêmes coordonnées que la figure 2, la chaleur spécifique d'un matériau composé de $CaCl_2, 6H_2O$ et de 4% de KCl, c'est-à-dire un matériau appartenant au groupe de matériaux décrits dans la publication du brevet européen 0 063 348.

Cette figure montre que la chaleur spécifique présente un pic entre 27°C et 28°C.

2

L'addition à l'hexahydrate de chlorure de calcium de 4% de KCl a donc pour effet d'abaisser d'environ 1,5°C la température de fusion du matériau.

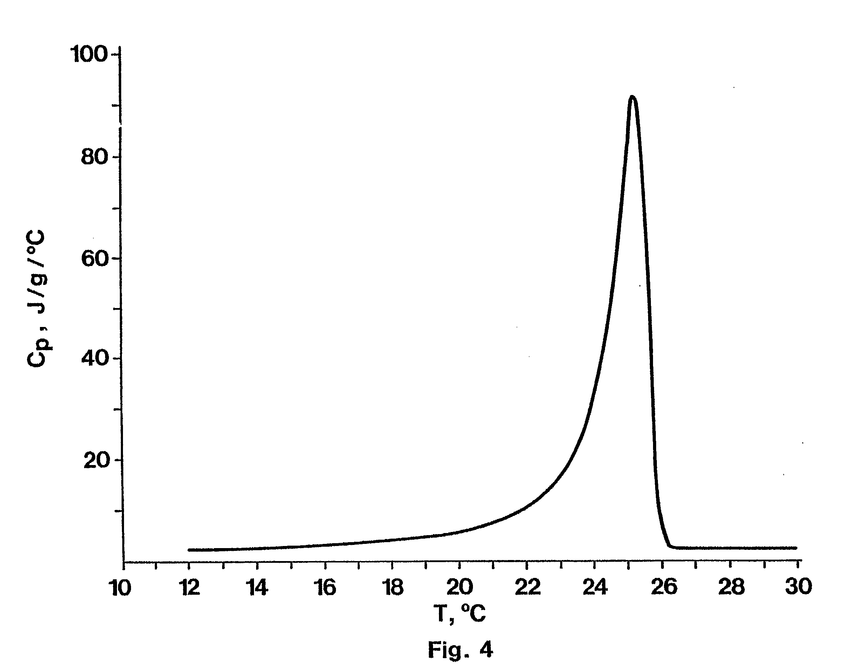

La figure 4 réprésente, avec les mêmes coordonnées que les figures 2 et 3, les mesures de la chaleur spécifique d'un matériau composé de $CaCl_2$, $6H_2O$ et de 8,8% de $NH_4Cl$. Cette figure montre que la chaleur spécifique présente un pic à environ 24°C. L'addition de 9% de chlorure d'ammonium entraîne donc un abaissement notable de la température de fusion du mélange. La chaleur spécifique de ce matériau est relativement faible.

Les inventeurs ont essayé divers mélanges à base d'hydrates de chlorure de calcium en ajoutant à ceux-ci plusieurs chlorures alcalins.

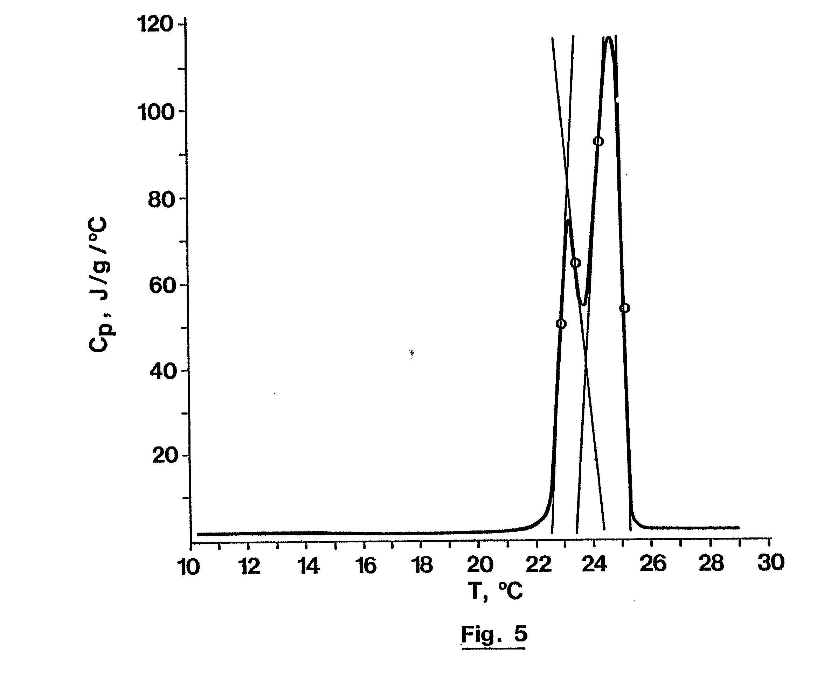

La figure 5 représente, avec les mêmes ordonnées que les figures 2 à 4, les mesures de la chaleur spécifique d'un matériau contenant par exemple 46,5% de $CaCl_2$, 45,3% d'eau, 3,1% de $NH_4Cl$, 5,1% de KCl.

Cette figure montre que la chaleur spécifique présente deux pics séparés situés entre 22 et 26°C. On obtient donc un abaissement de la température de fusion mais on n'a plus une température de fusion bien déterminée.

De nombreux essais ont été réalisés en faisant varier les teneurs dans les plages indiquées ci-après:

Pour $CaCl_2$ entre 45% et 49%
pour $H_2O$ entre 43% et 46%
pour $NH_4Cl$ entre 0% et 10%
pour KCl entre 0% et 7%
pour NaCl entre 0,1% et 1%

Ces essais ont montré que la plupart des mélanges de ces cinq composants pris dans les proportions indiquées ci-dessus, conduisent à des courbes de chaleur latente du même type que celle qui est représentée sur la figure 5.

Ces résultats permettent de prévoir que le diagramme de phase des systèmes $CaCl_2$, $H_2O$, $NH_4Cl$, KCl et NaCl mettent en jeu des surfaces de liquides nombreuses dans la plage de températures comprises entre 21°C et 27°C avec des intersections à pente faible propices à des formations d'eutectiques locaux très proches au point de vue des températures de fusion.

Les températures de fusion de ces mélanges se situant entre 21 et 27°C sont intéressantes mais pour des applications pratiques dans le domaine du stockage de calories il est avantageux d'utiliser un matériau ayant une température de fusion plus précise qui conduit à des variations d'enthalpies élevées dans des plages de variation de température étroites.

Les inventeurs ont donc cherché à trouver un mélange eutectique de chlorure de calcium, d'eau et de chlorures de potassium, d'ammonium et de sodium.

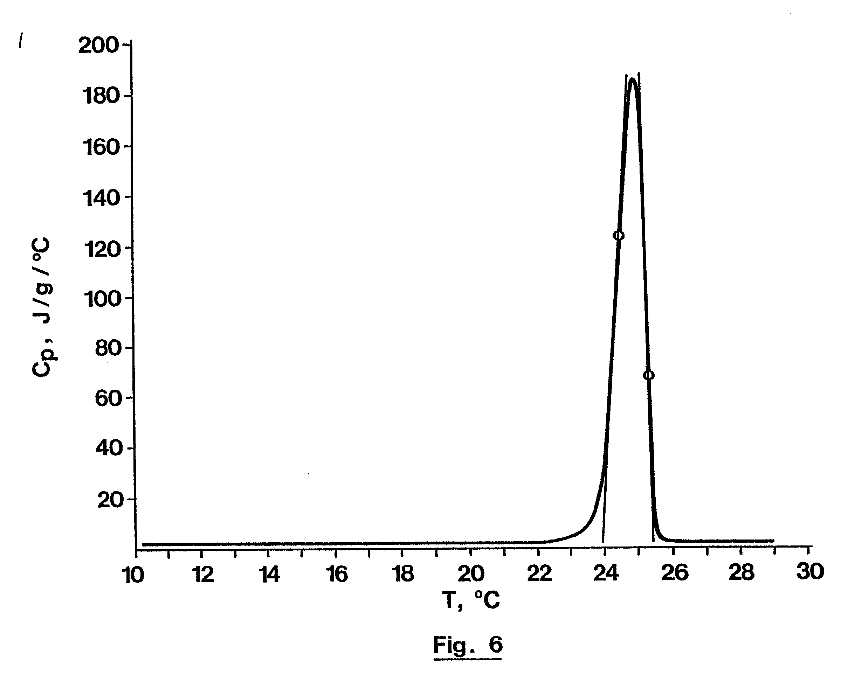

La figure 6 représente, avec les mêmes coordonnées que les figures 2 à 5, la chaleur spécifique d'un matériau qui contient les proportions en poids ci-après:

$CaCl_2$ : 47,7%
$H_2O$ : 44%
$NH_4Cl$ : 3,4%
KCl : 4,5%
NaCl : 0,3%

Les proportions relatives de $CaCl_2$ et d'eau dans ce matériau correspondent à celles d'un mélange d'hydrates de chlorure de calcium contenant six molécules d'hexahydrate pour une molécule de tétrahydrate.

La figure 6 montre que ce matériau est un eutectique ayant une température de fusion en sommet de pic de 24,9°C.

La figure 7 réprésente la variation d'enthalpie ΔH en Joules/gramme de ce mélange. On voit sur cette courbe que l'on obtient par exemple entre 22°C et 26°C une variation d'enthalpie de 189 J/g.

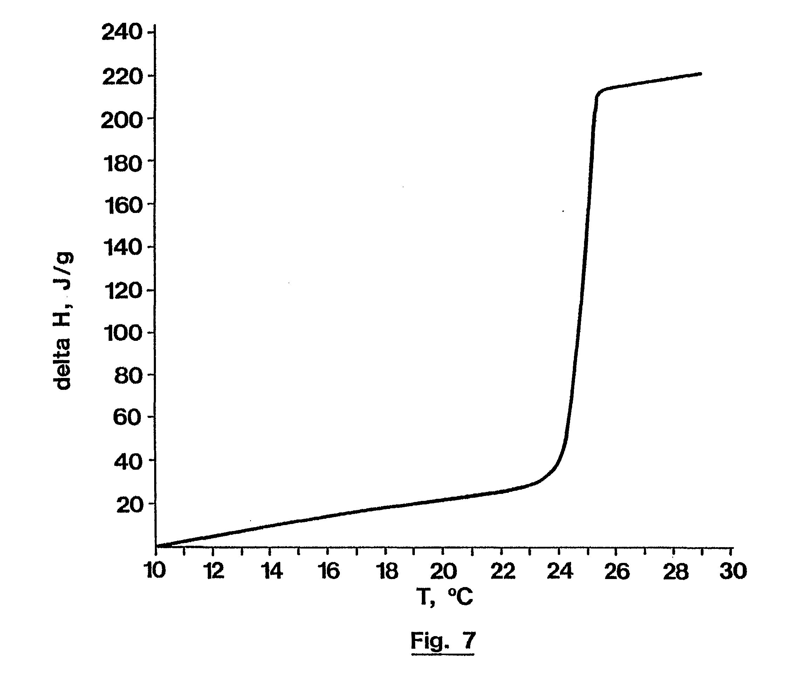

Le début de fusion caractérisé par la tangente au point d'inflexion sur la branche de courbe ascendante selon la figure 7, se situe à 23,9°C.

Un matériau ayant cette composition précise ou une composition très voisine constitue donc un très bon accumulateur de calories autour de 24,5°C et ce matériau présente un intérêt industriel car il peut être utilisé dans les installations de stockage de calories à basse température par exemple dans les installations de stockage de calories solaires ou de récupération d'énergies industrielles à basse température.

Si l'on écarte des proportions correspondant au matériau selon la figure 6, on n'a plus un eutectique et on retrouve des courbes de chaleur latente comportant plusieurs pics comme représenté sur la figure 5.

Toutefois, dans la pratique, on peut utiliser des matériaux dont les proportions varient légèrement par rapport aux proportions théoriques de l'eutectique. Ainsi les proportions théoriques de $CaCl_2$ et de $H_2O$ peuvent varier de ± 0,5% autour de la valeur théorique dans l'eutectique. Les proportions de $NH_4Cl$ et de KCl peuvent varier de ± 0,3% autour de la valeur théorique dans l'eutectique. Enfin la teneur en NaCl peut varier entre 0,1 et 1%. On obtient ainsi des matériaux ayant une température déterminée de changement de phase solide-liquide de 24,5°C ± 0,6°C.

Le chlorure de calcium industriel contient naturellement une faible proportion de chlorure de sodium, de sorte que lorsqu'on prépare un matériau selon l'invention à partir de chlorure de calcium industriel, il n'est pas nécessaire d'ajouter du chlorure de sodium.

Un matériau selon l'invention comporte avantageusement, de façon connue, des traces d'un agent nucléant destiné à éviter les phénomènes de surfusion.

Le matériau selon l'invention étant eutectique, tout écart de composition par rapport aux proportions optimales correspondant à l'eutectique risque de conduire à des décantations de phases solides non solubles dans l'intervalle de température utile.

Avantageusement on lutte contre un tel défaut d'homogénéité en utilisant le matériau mélangé à une poudre stabilisante prise dans une proportion comprise entre 5% et 15% du poids total. Cette poudre stabilisante est un mélange de diatomites contenant une proportion en poids d'au moins 50% de diatomites aciculaires, ayant la forme d'aiguilles dont la longeur est au moins égale à dix fois la largeur.

L'invention a pour résultat de nouveaux matériaux accumulateurs de chaleur qui présentent une capacité d'échange thermique élevée dans une plage de température restreinte à quelques degrés et située entre 20 et 26°C.

Ce domaine de température convient parfaitement aux applications de matériaux selon l'invention comme matériaux accumulateurs de calories à basse température dans des installations de chauffage ou de climatisation de locaux qui doivent être maintenus à une température comprise entre 15°C et 20°C.

Les nouveaux matériaux selon l'invention ont une composition qui est celle d'un eutectique ou d'un quasi eutectique ayant une température de fusion bien déterminée et c'est grâce à cette propriété qu'ils présentent une variation de température de quelques degrés de part et d'autre de la témperature de fusion.

## Revendications

1 - Matériau à base de chlorure de calcium hydraté accumulant de la chaleur par changement de phase, caractérisé en ce qu'il est constitué par une eutectique ayant une température déterminée de changement de phase solide-liquide de 24,5°C ± 0,6°C qui est composé de:

47,7% ± 0,5% en poids de chlorure de calcium ($CaCl_2$);

44% ± 0,5% en poids d'eau;

3,4% ± 0,3% en poids de chlorure d'ammonium ($NH_4Cl$);

4,5% ± 0,3% en poids de chlorure de potassium ($KCl$); et entre 0,1% et 1% de chlorure de sodium ($NaCl$).

2 - Matériau selon la revendication 1, caractérisé en ce qu'il contient, en outre, une proportion comprise entre 5% et 15% de son poids total d'une poudre stabilisante qui est un mélange de diatomites contenant une proportion en poids d'au moins 50% de diatomites aciculaires, ayant la forme d'aiguilles dont la longueur est au moins égale à dix fois la largeur.

## Patentansprüche

1. Material auf der Basis von hydratisiertem Calciumchlorid, das Wärme durch Phasenänderung speichert, dadurch gekennzeichnet, daß es durch ein Eutektikum mit einer bestimmten Temperatur der Phasenänderung festflüssig von 24,5°C ± 0,6°C gebildet wird und zusammengesetzt ist aus:

47,7 ± 0,5 Gew.-% Calciumchlorid ($CaCl_2$);

44 ± 0,5 Gew.-% Wasser;

3,4 ± 0,3 Gew.-% Ammoniumchlorid ($NH_4Cl$);

4,5 ± 0,3 Gew.-% Kaliumchlorid ($KCl$);

und zwischen 0,1% und 1% Natriumchlorid ($NaCl$).

2. Material nach Anspruch 1, dadurch gekennzeichnet, daß es außerdem in einer Menge zwischen 5% und 15% seines Gesamtgewichts ein stabilisierendes Pulvers enthält, das eine Mischung von Diatomiten ist, enthaltend in einem Gewichtsverhältnis von wenigstens 50% nadelförmige Diatomiten die die Form von Nadeln mit einer Länge wenigstens gleich der 10-fachen Dicke haben.

## Claims

1. Material based on calcium chloride hydrate accumulating heat by means of a phase change, characterized in that it consists of a eutectic which has a determined solid-liquid phase change temperature of 24.5°C ± 0.6°C which is made up of:

47.7% ± 0.5% by weight of calcium chloride ($CaCl_2$),

44% ± 0.5% by weight of water,

3.4% ± 0.3% by weight of ammonium chloride ($NH_4Cl$),

4.5% ± 0.3% by weight of potassium chloride ($KCl$),

and between 0.1% and 1% of sodium chloride ($NaCl$).

2. Material according to Claim 1, characterized in that it additionally contains a proportion of between 5% and 15% of its total weight of a stabilizing powder which is a mixture of diatomites containing a weight proportion of at least 50% of acicular diatomites having the form of needles whose length is at least equal to ten times the width.

# CaCl₂.6H₂O + excès d'eau en %

Fig. 1

$CaCl_2.6H_2O + 2\% SrCl_2.6H_2O$

Fig. 2

$$CaCl_2 . 6 H_2O + 4 \% KCl$$

Fig. 3

Fig. 4

EP 0 202 712 B1

Fig. 5

EP 0 202 712 B1

Fig. 6

EP 0 202 712 B1

Fig. 7

EP 0 202 712 B1